# EUROPEAN PATENT APPLICATION

(11) **EP 4 376 244 A2**
(43) Date of publication of application: **29.05.2024**
(21) Application number: 23211451.2
(22) Date of filing: 22.11.2023
(51) Int. Cl.: H02J 1/08, H01G 11/08, H02J 7/00, H02J 7/34

(54) **ULTRACAPACITOR MODULE**

(30) Priority: 23.11.2022 US 202263427492 P; 27.04.2023 US 202363462323 P; 21.11.2023 US 202318515639
(71) Applicant: Aptiv Technologies AG, 8200 Schaffhausen (CH)
(72) Inventor: DEUTSCH, Robert, Shelby Township, MI 48315 (US); MOORE, Stephen, Fishers, IN 46037 (US); WANG, Yiqi, Troy, MI 48083 (US)
(74) Representative: Bardehle Pagenberg Partnerschaft mbB Patentanwälte Rechtsanwälte

(57) **Abstract**

An ultracapacitor module (100) may include an ultracapacitor cell stack (202) containing one or more ultracapacitor cells (204). An ultracapacitor module (100) may include a bidirectional boost/buck DC/DC converter (208). The ultracapacitor cell stack (202) and the DC/DC converter (208) may be configured to be connected in series with a voltage supply bus (218) of a vehicle. An ultracapacitor module (100) may include a voltage sensor (234) configured to determine an operating voltage of the voltage supply bus (218). An ultracapacitor module (100) may include an electronic controller (206) in electrical communication with the DC/DC converter (208) and the voltage sensor (234). The electronic controller (206) may be configured to control the DC/DC converter (208) such that the ultracapacitor cell stack (202) operates in a voltage range that is 20 to 80 percent of the operating voltage of the voltage supply bus (218).

## Description

This disclosure is directed to an ultracapacitor module.

Typically, an ultracapacitor module connected to a voltage supply bus has no ability to control the current sourced from or provided to the ultracapacitor. An example of this may be found in an ultracapacitor module in a voltage stabilization system that increases the voltage while engaging the starter system of an internal combustion engine and includes a parallel DC/DC converter to recharge the capacitors in the ultracapacitor module. Another example is a backup power supply module which increases the voltage of the voltage supply bus of a vehicle when the bus voltage sags. This module also includes a parallel DC/DC converter to recharge the capacitors in the ultracapacitor module. These examples have no need for adaptive voltage control because they have no method of controlling a response of the ultracapacitor module to voltage transients on the voltage supply bus. In these examples, the capacitor voltage and the working range of the voltage supply bus are the same. There is no control of the bus voltage other than the natural control provided by the capacitor.

In some aspects, the techniques described herein relate to an ultracapacitor module, including: an ultracapacitor cell stack containing one or more ultracapacitor cells; a bidirectional boost/buck DC/DC converter, wherein the ultracapacitor cell stack and the DC/DC converter are configured to be connected in series with a voltage supply bus of a vehicle; a voltage sensor configured to determine an operating voltage Vo of the voltage supply bus; and an electronic controller in electrical communication with the DC/DC converter and the voltage sensor, wherein the electronic controller is configured to control the DC/DC converter such that the ultracapacitor cell stack operates in a voltage range that is 20 to 80 percent of the operating voltage Vo of the voltage supply bus.

In some aspects, the techniques described herein relate to a method of operating an ultracapacitor module connected to a voltage supply bus of a vehicle, the ultracapacitor module having an ultracapacitor cell stack containing one or more ultracapacitor cells, a bidirectional boost/buck DC/DC converter, wherein the ultracapacitor cell stack and the DC/DC converter are connected in series with the voltage supply bus, a voltage sensor configured to determine an operating voltage of the voltage bus, and an electronic controller in electrical communication with the DC/DC converter and the voltage sensor, the method including: controlling the DC/DC converter such that the ultracapacitor cell stack operates in a voltage range that is 20 to 80 percent of the operating voltage Vo of the voltage supply bus.

In some aspects, the techniques described herein relate to a computer readable medium containing program instructions for operating an ultracapacitor module connected to a voltage supply bus of a vehicle, the ultracapacitor module having an ultracapacitor cell stack containing one or more ultracapacitor cells, a bidirectional boost/buck DC/DC converter, wherein the ultracapacitor cell stack and the DC/DC converter are connected in series with the voltage supply bus, a temperature sensor configured to measure a temperature T corresponding to an ambient temperature or a temperature of the ultracapacitor module, a voltage sensor configured to determine an operating voltage Vo of the voltage supply bus, and an electronic controller in electrical communication with the DC/DC converter, the temperature sensor, and the voltage sensor, wherein execution of the program instructions by one or more processors of a computer system causes the electronic controller to carry out: controlling the DC/DC converter such that the ultracapacitor cell stack operates in a voltage range that is 20 to 80 percent of the operating voltage Vo of the voltage supply bus.

The ultracapacitor module will now be described, by way of example with reference to the accompanying drawings, in which:
FIG. 1 is an isometric view of an ultracapacitor module according to some embodiments.
FIG. 2 is a schematic diagram of system components of an ultracapacitor module according to some embodiments.
FIG. 3 shows a diagram of transients to be compensated by the ultracapacitor module according to some embodiments.
FIG. 4 is a diagram of an operating voltage range of an ultracapacitor cell stack and a programmable float voltage value of an ultracapacitor module according to some embodiments.

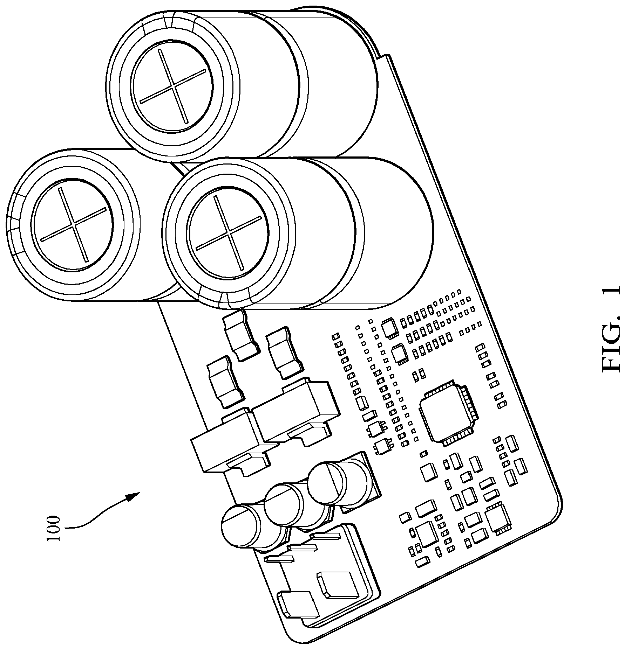

The present disclosure describes an ultracapacitor module shown in FIG. 1, hereafter referred to as the UCM 100. The UCM 100 addresses many of the deficiencies of the prior art described above. The UCM 100 in this example protects the voltage supply bus in a vehicle, e.g., an internal combustion engine vehicle, a hybrid electric vehicle, or an electric vehicle, from voltage sags or flyback voltage spikes caused by the switching of high current draw loads on and off on the voltage supply bus, e.g., electric antilock brakes, electric power steering, etc., thereby providing protection from voltage sags and flyback voltage spikes having a duration of 100 microseconds to 100 milliseconds to other electronic modules on the voltage supply bus. The UCM 100 may also or alternatively be configured to provide emergency back-up power to satisfy safety critical systems, such as brake-by-wire or power door locks, for 1 to 2 seconds, in case of a loss of the primary electrical power supply in order to meet the necessary automotive safety integrity level (ASIL) of these systems, such as defined by the International Standards Organization (ISO) 26262-1:2001 Road Vehicle Functions Safety Standard.

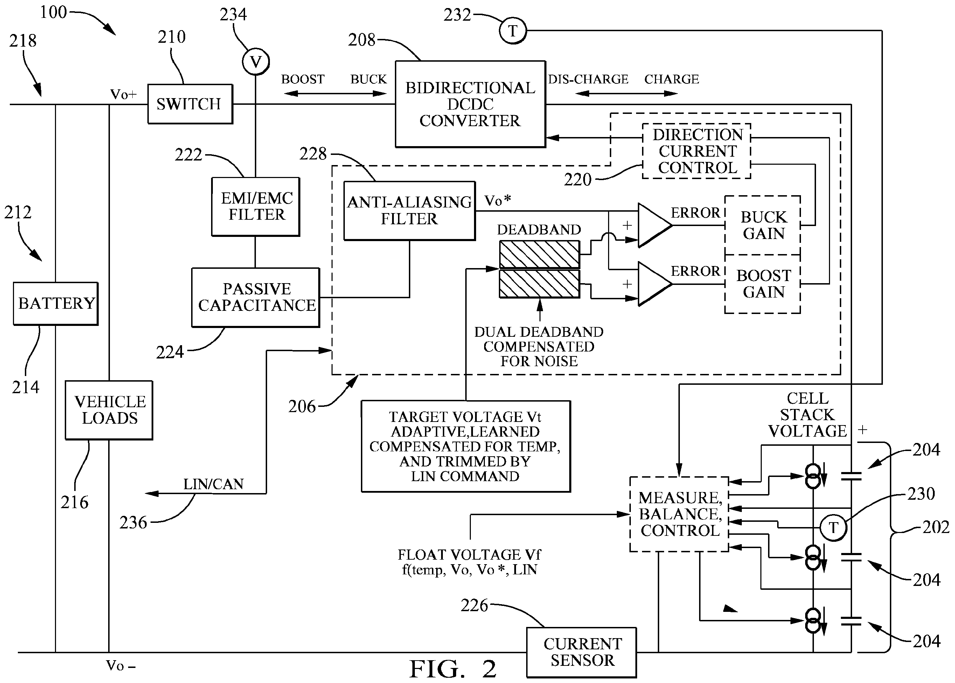

The UCM 100 in the current example includes an ultracapacitor cell stack 202, shown in FIG. 2. An operating voltage range of the ultracapacitor cell stack 202 is lower than a nominal operating voltage Vo of the voltage supply bus. For example, the operating voltage range of the ultracapacitor cell stack 202 is about half of the nominal operating voltage Vo of the voltage supply bus. As used herein, the term "about" means ± 30%. For example, for a voltage supply bus having a nominal operating voltage Vo of 14 volts, the operating voltage range of the ultracapacitor cell stack 202 is in the range of 5 to 8.5 volts.

As shown in FIG. 2, the UCM 100 includes an ultracapacitor cell stack 202 that has several ultracapacitor cells 204. As used herein, an ultracapacitor cell is a capacitive storage device having a capacitance of at least 100 farads. In this example three 325 farad, 2.7 volt ultracapacitor cells 204 are connected in series, thereby providing the ultracapacitor cell stack 202 with an equivalent capacitance of 108 farads and a working range of 5.0 to 8.4 volts. The configuration of the ultracapacitor cell stack 202 could be 3S1P (3 cells in series and 1 parallel string with 108F and 8.4V max) as in this example, or it could be 3S2P (3 cells in series and 2 parallel strings with 217F and 8.4V max), or in general xSyP. The ultracapacitor cell stack 202 is configured to operate at currents up to 200 amperes. The UCM 100 also includes an electronic controller 206 which controls the voltage of each ultracapacitor cell 204 and thereby controls the voltage of the ultracapacitor cell stack 202. The electronic controller 206 has one or more processors and memory. The processors may be microprocessors, application specific integrated circuits (ASIC), or built from discrete logic and timing circuits (not shown). Software instructions that program the processors may be stored in a non-volatile memory device (not shown). The memory device may be contained within the microprocessor or ASIC. Alternatively, the memory device may be a separate device. Non-limiting examples of the types of memory device that may be used include electrically erasable programmable read only memory (EEPROM), masked read only memory (ROM), and flash memory devices.

The UCM 100 further includes a bidirectional boost/buck DC/DC converter 208 that is capable of conducting at least the same current as the ultracapacitor cell stack 202 as the current flows in to or out of the ultracapacitor cell stack 202. Under the control of the electronic controller 206, the DC/DC converter 208 quickly switches between boost and buck modes. This time period for this transition is preferably in the order of 25 to 100 microseconds. Other electronic modules connected to the voltage supply bus may also include capacitors that are appropriately sized to provide electrical power to these electronic modules during voltage transients on the voltage supply bus while the DC/DC converter 208 is transitioning between boost and buck modes. The electronic controller 206 also controls the direction and the magnitude of electrical power flowing through the DC/DC converter 208. The electronic controller 206 additionally monitors the operating voltage Vo of the voltage supply bus 218 and adaptively determines its nominal value, its rate of change, and, optionally, its frequency spectrum content. The UCM 100 may optionally include a switch 210 to protect against reverse polarity voltage.

FIG. 2 is a block schematic diagram of vehicle electrical system 212 utilizing ultracapacitor module 100 according to some embodiments. In some embodiments, vehicle electrical system 212 includes one or more power sources 214 (e.g., battery, alternator, etc.), one or more vehicle loads 216, a voltage supply bus 218, and the UCM 100. UCM 100 is connected to the voltage supply bus 218 and is configured to selectively provide power to the voltage supply bus 218 (boost mode) or receive power from the voltage supply bus 218 (buck mode). The voltage on the voltage supply bus 218 is designated as operating voltage Vo and may also be referred to as bus voltage.

In some embodiments, UCM 100 includes a plurality of ultracapacitor cells 204 connected in series with one another to form an ultracapacitor cell stack 202, a DC/DC converter 208, a switch 210 and an electronic controller 206. As shown in FIG. 2, DC/DC converter 208 is connected in series between the plurality of ultracapacitor cells 204 and the voltage supply bus 218. In general, UCM 100 operates by monitoring the operating voltage Vo on the voltage supply bus 218 and selectively operating DC/DC converter 208 to supply power to the voltage supply bus 218 when the operating voltage Vo falls below a threshold or target bus voltage value Vt (boost mode) and to receive power from the voltage supply bus 218 when the operating voltage Vo is above the threshold or target bus voltage value Vt (buck mode). To prevent the DC/DC converter 208 from oscillating between boost and buck modes, a dead band is set around the target bus voltage value Vt. The DC/DC converter 208 does not operate in boost mode until the operating voltage Vo is at or below a lower dead band limit and the DC/DC converter 208 will continue to operate in boost mode until the operating voltage Vo is raised/boosted back to the target bus voltage value Vt (or within an acceptable tolerance of the target bus voltage value Vt). Similarly, the DC/DC converter 208 does not operate in buck mode until the operating voltage Vo is at or above an upper dead band limit and the DC/DC converter 208 will continue to operate in buck mode until the operating voltage Vo is lowered/bucked back to the target bus voltage value Vt (or within an acceptable tolerance of the target bus voltage value Vt). The dead band is typically selected to accommodate variations in the operating voltage Vo, which may be affected by wire and connector resistance, ambient temperature, vehicle-to-vehicle variances, component tolerances, system life stage, and electrical noise. In some embodiments, the UCM 100 accounts for variations in the operating voltage Vo that allows for utilization of a smaller dead band range, as described in more detail below. In particular, in some embodiments the UCM 100 uses a table of voltage values (initial voltage value Vi) and corresponding temperatures. At vehicle start-up, a temperature is measured corresponding to an ambient temperature or a temperature of the UCM 100 and the initial voltage value Vi for the corresponding temperature is selected from the table and is used to determine the target bus voltage value Vt. The voltage values in the table may be selectively updated over time in order to account for variances that are measured in the system. In this way, the UCM 100 is able to utilize learned voltage values to control the target bus voltage value Vt and thereby minimize the dead band range that may otherwise be required. In some embodiments, the target bus voltage value Vt may also be adjusted during operation of the UCM 100 based on additional inputs received from the vehicle regarding actual or expected loads, events, etc.

As shown in FIG. 2, electronic controller 206 is configured to monitor the operation of DC/DC converter 208 and includes a direction and current control block 220 to provide commands for controlling the operation of DC/DC converter 208. Monitoring may include utilizing one or more sensors 234 to monitor the operating voltage Vo of the voltage supply bus 218. Monitoring may further include monitoring ultracapacitor cell stack temperature. Electronic controller 206 provides as a command the direction of power flow (buck/boost) and a target voltage/current for the DC/DC converter 208. As described in more detail below, the electronic controller may adjust the target bus voltage value Vt based on additional inputs received from the vehicle regarding actual or expected loads, events, etc. By controlling the target bus voltage value Vt and controlling the direction of power (buck/boost), the dead band range may be significantly narrowed. Electronic controller 206 is also configured to monitor and control the operation of the ultracapacitor cell stack 202, including monitoring the balance, state of health (SOH), state of charge (SOC), diagnostics, safety, temperature, etc. associated with the ultracapacitor cell stack 202.

As shown in FIG.2, UCM 100 may also include an electromagnetic interference/ electromagnetic compliance (EMI/EMC) filter 222 and passive capacitance 224 between the voltage supply bus 218 and the voltage sensing input of the electronic controller 206 which then passes through an anti-aliasing filter 228 within the electronic controller 206. The UCM 100 may also include one or more current sensors 226 to monitor the current flowing to/from the ultracapacitor cells 204, a first temperature sensor 230 to measure the temperature of the ultracapacitor cells 204, a second temperature sensor 232 to measure the temperature of the DC/DC converter 208, and one or more voltage sensors 234 configured to measure the operating voltage Vo of the voltage supply bus 218.

As further shown in FIG. 2, the electronic controller 206 may also include a digital anti-aliasing filter 228 to filter the operating voltage Vo input from the voltage supply bus 218, thereby providing a filtered operating voltage Vo*. The filtered operating voltage Vo* is filtered to remove noise, such as that produced by the switching of the DC/DC converter 208 or other electrical devices connected to the voltage supply bus 218. The electronic controller 206 is also configured to compare the operating voltage Vo to the upper and lower dead band limits and determine a buck gain if the operating voltage Vo is above the upper dead band limit and determine a boost gain if the operating voltage Vo is below the lower dead band limit. The buck/boost gain is sent to the direction and current control block 220 in the electronic controller 206 to provide the commands for controlling the DC/DC converter 208.

As shown in FIG. 2, the buck/boost DC/DC converter 208 is connected in series between the ultracapacitor cell stack 202 in the ultracapacitor module 100and the voltage supply bus 218 and is operated under the direction of the electronic controller 206. The electronic controller 206 provides the DC/DC converter 208 with the ability to map the ultracapacitor cell stack 202 voltage to the operating voltage Vo. Actively controlling a programmable float voltage value Vf is the means of mapping the ultracapacitor cell stack 202 voltage to the operating voltage Vo.

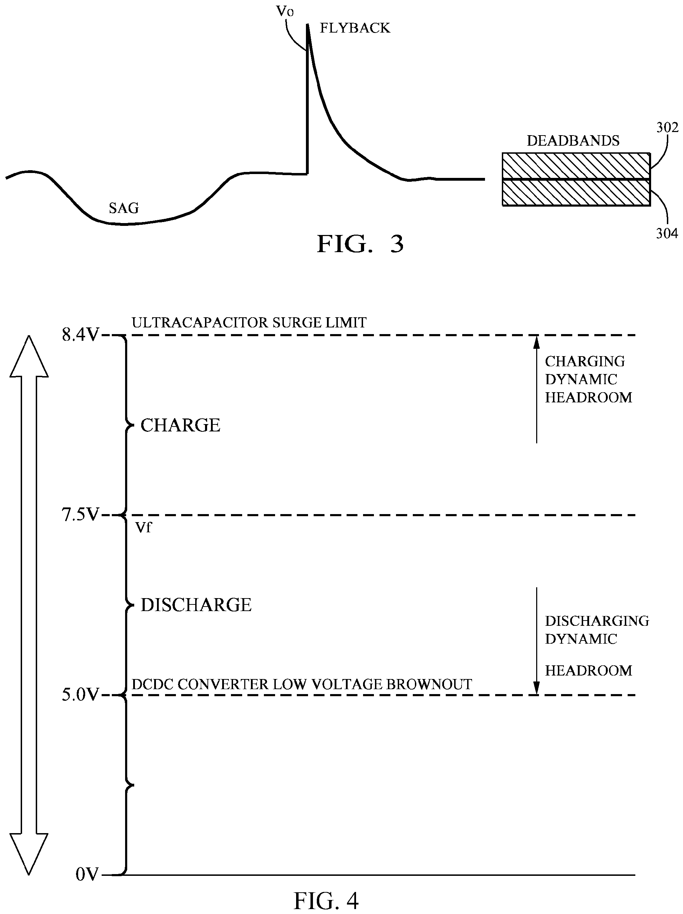

The operating voltage Vo has a relatively large variance range due to temperature, operational tolerances of other components, vehicle-to-vehicle variance, ultracapacitor module life stage, and electrical noise on the voltage supply bus 218. Upper and lower dead bands 302, 304, shown in FIG. 3, are established to avoid oscillation of the DC/DC converter 208 between boost and buck modes due to small variations of the operating voltage Vo. The dead bands 302, 304 between the boost and buck modes are as large as, or larger than, the variances and tolerances described above to avoid undesirable switching between boost and buck modes. With large dead bands, the electronic controller 206 cannot minimize a disturbance on the voltage supply bus 218 because control of the voltage supply bus 218 does not begin until the operating voltage Vo is outside the limits of the dead bands 302, 304. The electronic controller 206 may independently control an upper dead band 302 with an upper dead band limit above the target bus voltage value Vt and a lower dead band 304 with a lower dead band limit below the target bus voltage value Vt. The DC/DC converter 208 does not operate in boost mode until the operating voltage Vo is at or below the lower dead band limit and the DC/DC converter 208 will continue to operate in boost mode until the operating voltage Vo is raised/boosted back to the target bus voltage value Vt (or within an acceptable tolerance of the target bus voltage value Vt). Similarly, the DC/DC converter 208 does not operate in buck mode until the operating voltage Vo is at or above the upper dead band limit and the DC/DC converter 208 will continue to operate in buck mode until the operating voltage Vo is lowered/bucked back to the target bus voltage value Vt (or within an acceptable tolerance of the target bus voltage value Vt).

FIG. 4 shows the operating voltage range of the ultracapacitor cell stack 202 between an upper voltage limit (designated as "ULTRACAPACITOR SURGE LIMIT" in FIG. 4) and a lower voltage limit (designated as "DCDC CONVERTER LOW VOLTAGE BROWNOUT" in FIG. 4). The upper voltage limit is set to protect the ultracapacitor cell stack 202 from absorbing excess voltage from the voltage supply bus 218 that would damage the ultracapacitor cell stack 202. The lower voltage limit is set at a level below which the ultracapacitor cell stack 202 is not able to supply enough power to the DC/DC converter 208 to raise the voltage on the voltage supply bus 218. The programmable float voltage value Vf is set between the upper and lower voltage limits and can be controlled by the electronic controller 206. The float voltage value Vf can be shifted down to increase charging headroom between the float voltage value Vf and the upper voltage limit, which decreases the discharging headroom between the float voltage value Vf and the lower voltage limit. Alternatively, the float voltage value Vf can be shifted up to increase discharging headroom between the float voltage value Vf and the lower voltage limit, which decreases the charging headroom between the float voltage value Vf and the upper voltage limit. The ultracapacitor cell stack 202 is charged to absorb excess voltage on the voltage supply bus 218 and the ultracapacitor cell stack 202 is discharged to provide electrical power to raise the voltage on the voltage supply bus 218.

In some aspects, the techniques described herein relate to an ultracapacitor module, including: an ultracapacitor cell stack containing one or more ultracapacitor cells; a bidirectional boost/buck DC/DC converter, wherein the ultracapacitor cell stack and the DC/DC converter are configured to be connected in series with a voltage supply bus of a vehicle; a voltage sensor configured to determine an operating voltage Vo of the voltage supply bus; and an electronic controller in electrical communication with the DC/DC converter and the voltage sensor, wherein the electronic controller is configured to control the DC/DC converter such that the ultracapacitor cell stack operates in a voltage range that is 20 to 80 percent of the operating voltage Vo of the voltage supply bus.

In some aspects, the techniques described herein relate to an ultracapacitor module, wherein the electronic controller is configured to control the DC/DC converter such that the ultracapacitor cell stack operates in a voltage range that is 30 to 70 percent of the operating voltage Vo of the voltage supply bus.

In some aspects, the techniques described herein relate to an ultracapacitor module, wherein the electronic controller is configured to control a direction and a magnitude of power flow through the DC/DC converter.

In some aspects, the techniques described herein relate to an ultracapacitor module, wherein the electronic controller is configured to monitor the operating voltage Vo of the voltage supply bus, adaptively determine the operating voltage Vo nominal value and rate of change and control the DC/DC converter to change the operating voltage Vo of the voltage supply bus.

In some aspects, the techniques described herein relate to an ultracapacitor module, wherein the electronic controller is configured to monitor a frequency spectrum content of the operating voltage Vo of the voltage supply bus and in response change upper and lower dead band limits.

In some aspects, the techniques described herein relate to an ultracapacitor module, wherein the electronic controller is further configured to disable the DC/DC converter when the operating voltage Vo is within a predetermined dead band range higher and/or lower than a target bus voltage value Vt.

In some aspects, the techniques described herein relate to an ultracapacitor module, wherein the ultracapacitor cell stack contains two or more ultracapacitor cells connected in series.

In some aspects, the techniques described herein relate to a method of operating an ultracapacitor module connected to a voltage supply bus of a vehicle, the ultracapacitor module having an ultracapacitor cell stack containing one or more ultracapacitor cells, a bidirectional boost/buck DC/DC converter, wherein the ultracapacitor cell stack and the DC/DC converter are connected in series with the voltage supply bus, a voltage sensor configured to determine an operating voltage of the voltage bus, and an electronic controller in electrical communication with the DC/DC converter and the voltage sensor, the method including: controlling the DC/DC converter such that the ultracapacitor cell stack operates in a voltage range that is 20 to 80 percent of the operating voltage Vo of the voltage supply bus.

In some aspects, the techniques described herein relate to a method, wherein the method further includes controlling the DC/DC converter such that the ultracapacitor cell stack operates in a voltage range that is 30 to 70 percent of the operating voltage Vo of the voltage supply bus.

In some aspects, the techniques described herein relate to a method, wherein the method further includes controlling a direction and a magnitude of power flow through the DC/DC converter.

In some aspects, the techniques described herein relate to a method, wherein the method further includes monitoring an operating voltage Vo of the voltage supply bus; adaptively determining the operating voltage Vo nominal value and rate of change; and controlling the DC/DC converter to change the operating voltage Vo of the voltage supply bus.

In some aspects, the techniques described herein relate to a method, wherein the method further includes monitoring a frequency spectrum content of the operating voltage Vo of the voltage supply bus; and changing upper and lower dead band limits.

In some aspects, the techniques described herein relate to a method, wherein the method further includes disabling the DC/DC converter when the operating voltage Vo is within a predetermined dead band range higher and/or lower than a target bus voltage value Vt.

In some aspects, the techniques described herein relate to a computer readable medium containing program instructions for operating an ultracapacitor module connected to a voltage supply bus of a vehicle, the ultracapacitor module having an ultracapacitor cell stack containing one or more ultracapacitor cells, a bidirectional boost/buck DC/DC converter, wherein the ultracapacitor cell stack and the DC/DC converter are connected in series with the voltage supply bus, a temperature sensor configured to measure a temperature T corresponding to an ambient temperature or a temperature of the ultracapacitor module, a voltage sensor configured to determine an operating voltage Vo of the voltage supply bus, and an electronic controller in electrical communication with the DC/DC converter, the temperature sensor, and the voltage sensor, wherein execution of the program instructions by one or more processors of a computer system causes the electronic controller to carry out: controlling the DC/DC converter such that the ultracapacitor cell stack operates in a voltage range that is 20 to 80 percent of the operating voltage Vo of the voltage supply bus.

In some aspects, the techniques described herein relate to a computer readable medium, wherein execution of the program instructions by one or more processors of a computer system further causes the electronic controller to control the DC/DC converter such that the ultracapacitor cell stack operates in a voltage range that is 30 to 70 percent of the operating voltage Vo of the voltage supply bus.

In some aspects, the techniques described herein relate to a computer readable medium, wherein execution of the program instructions by one or more processors of a computer system further causes the electronic controller to control a direction and a magnitude of power flow through the DC/DC converter.

In some aspects, the techniques described herein relate to a computer readable medium, wherein execution of the program instructions by one or more processors of a computer system further causes the electronic controller to carry out: monitoring an operating voltage Vo of the voltage supply bus; adaptively determining the operating voltage Vo nominal value and rate of change; and controlling the DC/DC converter to change the operating voltage Vo of the voltage supply bus.

In some aspects, the techniques described herein relate to a computer readable medium, wherein execution of the program instructions by one or more processors of a computer system further causes the electronic controller to carry out: monitoring frequency spectrum content of the operating voltage Vo via the electronic controller; and changing upper and lower dead band limits.

In some aspects, the techniques described herein relate to a computer readable medium, wherein execution of the program instructions by one or more processors of a computer system further causes the electronic controller to disable the DC/DC converter when the operating voltage Vo is within a predetermined dead band range higher and/or lower than a target bus voltage value Vt.

While the invention has been described with reference to an exemplary embodiment(s), it will be understood by those skilled in the art that various changes may be made, and equivalents may be substituted for elements thereof without departing from the scope of the invention. In addition, many modifications may be made to adapt a particular situation or material to the teachings of the invention without departing from the essential scope thereof. Therefore, it is intended that the invention is not limited to the disclosed embodiment(s), but that the invention will include all embodiments falling within the scope of the appended claims.

As used herein, 'one or more' includes a function being performed by one element, a function being performed by more than one element, e.g., in a distributed fashion, several functions being performed by one element, several functions being performed by several elements, or any combination of the above.

It will also be understood that, although the terms first, second, etc. are, in some instances, used herein to describe various elements, these elements should not be limited by these terms. These terms are only used to distinguish one element from another. For example, a first contact could be termed a second contact, and, similarly, a second contact could be termed a first contact, without departing from the scope of the various described embodiments. The first contact and the second contact are both contacts, but they are not the same contact.

The terminology used in the description of the various described embodiments herein is for the purpose of describing particular embodiments only and is not intended to be limiting. As used in the description of the various described embodiments and the appended claims, the singular forms "a", "an" and "the" are intended to include the plural forms as well, unless the context clearly indicates otherwise. It will also be understood that the term "and/or" as used herein refers to and encompasses any and all possible combinations of one or more of the associated listed items. It will be further understood that the terms "includes," "including," "comprises," and/or "comprising," when used in this specification, specify the presence of stated features, integers, steps, operations, elements, and/or components, but do not preclude the presence or addition of one or more other features, integers, steps, operations, elements, components, and/or groups thereof.

As used herein, the term "if' is, optionally, construed to mean "when" or "upon" or "in response to determining" or "in response to detecting," depending on the context. Similarly, the phrase "if it is determined" or "if [a stated condition or event] is detected" is, optionally, construed to mean "upon determining" or "in response to determining" or "upon detecting [the stated condition or event]" or "in response to detecting [the stated condition or event]," depending on the context.

Additionally, while terms of ordinance or orientation may be used herein these elements should not be limited by these terms. All terms of ordinance or orientation, unless stated otherwise, are used for purposes distinguishing one element from another, and do not denote any particular order, order of operations, direction or orientation unless stated otherwise.

## Claims

1. An ultracapacitor module (100), comprising:
an ultracapacitor cell stack (202) containing one or more ultracapacitor cells (204);
a bidirectional boost/buck DC/DC converter (208), wherein the ultracapacitor cell stack (202) and the DC/DC converter (208) are configured to be connected in series with a voltage supply bus (218) of a vehicle;
a voltage sensor (234) configured to determine an operating voltage Vo of the voltage supply bus (218); and
an electronic controller (206) in electrical communication with the DC/DC converter (208) and the voltage sensor (234), wherein the electronic controller (206) is configured to control the DC/DC converter (208) such that the ultracapacitor cell stack (202) operates in a voltage range that is 20 to 80 percent of the operating voltage Vo of the voltage supply bus (218).

2. The ultracapacitor module (100) of claim 1, wherein the electronic controller (206) is configured to control the DC/DC converter (208) such that the ultracapacitor cell stack (202) operates in a voltage range that is 30 to 70 percent of the operating voltage Vo of the voltage supply bus (218).

3. The ultracapacitor module (100) of claim 1 or 2, wherein the electronic controller (206) is configured to control a direction and a magnitude of power flow through the DC/DC converter (208).

4. The ultracapacitor module (100) of any one of the preceding claims, wherein the electronic controller (206) is configured to monitor the operating voltage Vo of the voltage supply bus (218), adaptively determine the operating voltage Vo nominal value and rate of change and control the DC/DC converter (208) to change the operating voltage Vo of the voltage supply bus (218).

5. The ultracapacitor module (100) of claim 4, wherein the electronic controller (206) is configured to monitor a frequency spectrum content of the operating voltage Vo of the voltage supply bus (218) and in response change upper and lower dead band limits (302, 304).

6. The ultracapacitor module (100) in accordance with claim 4 or 5, wherein the electronic controller (206) is further configured to disable the DC/DC converter (208) when the operating voltage Vo is within a predetermined dead band range higher and/or lower than a target bus voltage value Vt.

7. The ultracapacitor module (100) of any one of the preceding claims, wherein the ultracapacitor cell stack (202) contains two or more ultracapacitor cells (204) connected in series.

8. A method of operating an ultracapacitor module (100) connected to a voltage supply bus (218) of a vehicle, the ultracapacitor module (100) having an ultracapacitor cell stack (202) containing one or more ultracapacitor cells (204), a bidirectional boost/buck DC/DC converter (208), wherein the ultracapacitor cell stack (202) and the DC/DC converter (208) are connected in series with the voltage supply bus (218), a voltage sensor (234) configured to determine an operating voltage of the voltage bus, and an electronic controller (206) in electrical communication with the DC/DC converter (208) and the voltage sensor (234), the method comprising:
controlling the DC/DC converter (208) such that the ultracapacitor cell stack (202) operates in a voltage range that is 20 to 80 percent of the operating voltage Vo of the voltage supply bus (218).

9. The method in accordance with claim 8, wherein the method further comprises controlling the DC/DC converter (208) such that the ultracapacitor cell stack (202) operates in a voltage range that is 30 to 70 percent of the operating voltage Vo of the voltage supply bus (218).

10. The method in accordance with claim 8 or 9, wherein the method further comprises controlling a direction and a magnitude of power flow through the DC/DC converter (208).

11. The method in accordance with any of claims 8 to 10, wherein the method further comprises:
monitoring an operating voltage Vo of the voltage supply bus (218);
adaptively determining the operating voltage Vo nominal value and rate of change; and
controlling the DC/DC converter (208) to change the operating voltage Vo of the voltage supply bus (218).

12. The method in accordance with claim 11, wherein the method further comprises:
monitoring a frequency spectrum content of the operating voltage Vo of the voltage supply bus (218); and
changing upper and lower dead band limits (302, 304).

13. The method in accordance with claim 11 or 12, wherein the method further comprises disabling the DC/DC converter (208) when the operating voltage Vo is within a predetermined dead band range higher and/or lower than a target bus voltage value Vt.
